# EUROPÄISCHE PATENTSCHRIFT

(11) **EP 2 486 297 B1**
(45) Veröffentlichungstag und Bekanntmachung des Hinweises auf die Patenterteilung: **08.04.2015**
(21) Anmeldenummer: 10768686.7
(22) Anmeldetag: 06.10.2010
(51) Int. Cl.: F16C 33/76, F16J 15/32

(54) **ABDICHTEINRICHTUNG AN EINEM PRODUKTRAUM FÜR CHEMISCHE UND PHARMAZEUTISCHE PRODUKTE**
SEALING DEVICE ON A PRODUCT CHAMBER FOR CHEMICAL AND PHARMACEUTICAL PRODUCTS
DISPOSITIF D'ÉTANCHÉITÉ SUR UN COMPARTIMENT À PRODUIT POUR PRODUITS CHIMIQUES ET PHARMACEUTIQUES

(30) Priorität: 07.10.2009 DE 202009013546 U
(43) Veröffentlichungstag der Anmeldung: 15.08.2012
(73) Patentinhaber: interseal Dipl.-Ing. Rolf Schmitz GmbH, 65719 Hofheim-Wallau (DE)
(72) Erfinder: SCHMITZ, Rolf, 65207 Wiesbaden (DE)
(74) Vertreter: Bill, Burkart Hartmut
(86) Internationale Anmeldenummer: PCT/EP2010/006098
(87) Internationale Veröffentlichungsnummer: WO 2011/042165

(56) Entgegenhaltungen:
- EP-A2- 1 039 161
- DE-A1- 2 447 333
- DE-A1- 3 721 145
- DE-A1- 4 444 719
- DE-A1- 19 532 549
- FR-A1- 2 814 514
- GB-A- 1 301 309
- US-A- 3 726 531

## Beschreibung

Die Erfindung bezieht sich auf eine Abdichteinrichtung an einem Produktraum für chemische und pharmazeutische Produkte, umfassend ein Wellendurchführungsgehäuse, ein Wellenlager, eine Wellenschonbuchse und eine Lippendichtungsanordnung.

Bei einer Dichtungsvorrichtung für eine durch eine Wand geführte Welle (DE 44 44 719 A1) wird die Wand durch eine Behälterwand mit angeschweißtem Flansch gebildet, die eine Öffnung zum Durchlass der Welle aufweisen. Ein Abstreiferring ist in dieser Öffnung nicht vorgesehen. Druckschwankungen im Behälterinneren werden durch keinerlei Drosselring bei ihrer Ausbreitung zur Dichtungsvorrichtung abgeschwächt.

Auf dem Gebiet des Maschinenbaus gibt es Abdichteinrichtungen für eine durch eine Wand geführte Welle (DE 195 32 549 A1, EP 1 039 161 A2), wobei die Abdichtung wegen Wellendurchbiegung infolge von Querkräften Schwierigkeiten macht. Deswegen montiert man die Dichtelemente in einen Dichtungsträger, der den Bewegungen der Welle-außer der Rotation - folgt, was durch Führungslager, die auf der Welle sitzen, bewirkt wird. Zum Schutz der Dichtelemente sind Ölabstreifringe bekannt.

In der chemischen und pharmazeutischen Industrie besteht das Problem der Abdichtung von Produkträumen, so dass keine Kontaminationen entstehen. Weder sollen schädliche Fremdprodukte in das Nutzprodukt eingetragen, noch soll Nutzprodukt durch Kriechspalte entweichen können, wobei solches durch Spalte tretende Produkt bei Umrüstung der Produktionsanlage als schädliches Fremdprodukt wirken könnte.

Der Erfindung liegt deshalb die Aufgabe zugrunde, eine Abdichteinrichtung an einem Produktraum für chemische und pharmazeutische Produkte zu schaffen, bei der eine gute Abdichtwirkung ohne Gefahr der Kontamination erzielt wird.

Die Lösung gemäß der Erfindung ist durch eine Abdichtanordnung an einem Produktraum mit den Merkmalen gemäß Anspruch 1 gegeben.

Die Erfindung geht von einer Abdichteinrichtung aus, die ein Wellendurchführungsgehäuse, ein Wellenlager, eine Wellenschonbuchse und eine Lippendichtungsanordnung voraussetzt. Gemäß Erfindung weist das Wellendurchführungsgehäuse angrenzend zum Produktraum hin eine Abstreiferausbildung auf, bei der ein vorzugsweise metallischer Abstreiferring mit einer auf Kunststoff basierenden Ringdichtung hinterlegt ist, welche mit ihrem inneren Ringrand an der Wellenschonbuchse zum Produktraum abdichtet. Der äußere Ringrand der Ringdichtung wird zwischen dem Abstreiferring und einem Drosselring geklemmt gehalten, der sich zwischen Wellendurchführungsgehäuse und Wellenschonbuchse erstreckt und einen Drosselspalt zur Wellenschonbuchse bestimmt. Auf diese Weise ist zusätzlich zur traditionellen Lippendichtungsanordnung eine weitere, als Abstreifer wirksame Abdichtung getreten, die dafür sorgt, dass sich Druckschwankungen im Produktraum weniger stark an der traditionellen Lippendichtungsanordnung bemerkbar machen mit der Folge, dass Kriechströme, die von Druckschwankungen im Produktraum angetrieben werden, von Produktmaterial weitgehend frei bleiben. Die Gefahr der Kontamination wird so vermieden.

Gemäß einer bevorzugten Ausgestaltung der Erfindung weist das Wellendurchführungsgehäuse eine Nische auf, in der, vom Produktraum aus gesehen, die Ringdichtung, der Drosselring, die Lippendichtanordnung und das Wellenlager angeordnet sind, wobei die Nische von dem Abstreiferring und von der Wellenschonbuchse abgeschlossen wird. Auf diese Weise bilden das Wellendurchführungsgehäuse, der Abstreiferring, die Ringdichtung, der Drosselring, die Lippendichtanordnung, das Wellenlager und die Wellenschonbuchse eine Bau- und Funktionseinheit zum Einbau in Rühr-, Misch- und Pumpanlagen der chemischen und pharmazeutischen Industrie für kontaminationsfreie Anwendungen.

Hilfreich in diesem Zusammenhang ist eine Zuleitung für Schutzgas in die Lippendichtungsanordnung, um einen Gegendruck zum Druck im Produktraum aufzubauen. Die Lippendichtungsanordnung ist in einem solchen Fall entsprechend aufgebaut, d.h. die Lippen der Lippendichtungsanordnung sind auf der Oberfläche der Wellenschonbuchse gegeneinander gerichtet.

Insbesondere in der pharmazeutischen Industrie gibt es Anforderungen auf äußerste Sterilität. Für diesen Anwendungszweck kann die Lippendichtungsanordnung mit Zuleitung für Sterilisierungsdampf aufgebaut sein, wobei sich Lücken und Kriechstromwege in der Abdichteinrichtung mit solchem Sterilisierungsdampf füllen, um eine Sterilisierung der Abdichteinrichtung sicherzustellen.

In praktischer Hinsicht wird die zwischen Wellendurchführungsgehäuse und Wellenschonbuchse gebildete Bau- und Funktionseinheit auf einen Wellenstumpf einer Rühr-, Misch- oder Pumpapparatur montiert, wobei der Wellenstumpf durch die Wellenschonbuchse hindurch reicht, und die Misch-, Rühr- oder Pumpapparatur eine Nabe aufweist, die unter Zwischenfügen eines O-Rings gegen eine Stirnfläche der Wellenschonbuchse gepresst wird. Dies stellt eine sichere Abdichtung des Wellenstumpfes gegen außen dar.

Das Wellendurchführungsgehäuse weist einen Raum zur Aufnahme einer Antriebsverbindung zur Welle bzw. zum Wellenstumpf der Rühr-, Misch- oder Pumpenapparatur auf. Ferner besitzt die Wellenschonbuchse an ihrem dem Produktraum abgewandten Ende Eingriffsaussparungen zum Eingriff einer Drehmomentmitnahme.

Die Materialien der aufeinander laufenden Teile (Wellenschonbuchse und Drosselring bzw. Ringdichtung) sind wenigstens an ihrer Oberfläche aneinander angepasst, um günstige Laufeigenschaften zu erbringen. Zu diesem Zweck wird die Wellenschonbuchse oberflächenvergütet.

Ausführungsbeispiele der Erfindung werden anhand der Zeichnung beschrieben. Dabei zeigt:
- Fig. 1: einen Längsschnitt durch die Abdichteinrichtung,
- Fig. 2: eine vergrößerte Einzelheit aus Fig. 1,
- Fig. 3: eine Abdichteinrichtung zu Sterilisierungszwecken und
- Fig. 4: eine weitere Abdichteinrichtung.

Die Abdichteinrichtung umfasst ein hohles Wellendurchführungsgehäuse 1, ein Wellenlager 2, eine Wellenschonbuchse 3, eine ringförmige Lippendichtungsanordnung 4, einen Drosselring 5, eine Ringdichtung 6 und einen radial nach innen vorspringenden, ringförmigen Abstreifer 7. Ein Wellenstumpf 8 ragt in den Hohlraum der Wellenschonbuchse 3 hinein und treibt ein Arbeitsgerät 9 an, das einen Mischflügel, einen Propeller oder ein Pumpenrad darstellen kann und von dem die Antriebsnabe in der Zeichnung abgebrochen dargestellt ist, die bei zwischengefügtem O-Ring 14 gegen das innere Ende der Wellenschonbuchse 3 angepresst wird. Das Arbeitsgerät 9 ist in einem Produktraum 10 für chemische und pharmazeutische Produkte angeordnet, der konventionell ausgebildet sein kann und von dem lediglich eine Buchse 13 dargestellt ist, in die das Wellendurchführungsgehäuse 1 abgedichtet eingefügt ist. Zwischen Arbeitsgerät 9 und Wellenschonbuchse 1 sowie Produktraumbegrenzung gibt es nur enge Spalte.

Das Wellendurchführungsgehäuse 1 ist insgesamt hülsenförmig ausgebildet, jedoch mit angepassten Oberflächen der Innen- und Außenseite. So werden auf der Innenseite ein zylindrischer Raum 11 und eine stufig ausgebildete Nische 12 gebildet, an deren größerem Durchmesser das Wellenlager 2 untergebracht ist, während am kleineren Durchmesser die Lippendichtungsanordnung 4, der Drosselring 5 und die Ringdichtung 6 untergebracht sind. Die Nische 12 wird axial nach innen durch den Abstreiferring 7 und radial nach innen durch die Wellenschonbuchse 3 begrenzt und abgeschlossen.

Das Wellenlager 2 ist als Schulterkugellager ausgebildet, und sein äußerer Laufring 21 wird mittels eines Sprengrings 22 an einer Schulter 23 der Nische 12 festgelegt. Der Innenlaufring 24 des Wellenlagers 2 liegt an einer Schulter der Wellenschonbuchse 3 an und wird durch die Wellenschonbuchse angetrieben, die ihrerseits über einen Drehmomentenstift 15 angetrieben wird. Die Wellenschonbuchse 3 wird an ihrem Produktraum-fernen Ende 32 durch den Innenlaufring 24 Kragträger-artig eingespannt, kann aber natürlich aufgrund der Kugeln 20 rotieren. Die Einspannung führt dazu, dass seitliche Kräfte, die auf das Arbeitsgerät 9 einwirken und die zu einer gewissen Durchbiegung des Wellenstumpfs 8 und der Wellenschonbuchse 3 führen, keinen großen Ausschlag der Welle erzeugen können, eben weil das Produktraum-ferne Ende 32 der Schonbuchse 3 am Innenlaufring 24 des Lagers 2 eingespannt ist und das Produktraum-nahe Ende 31 der Schonbuchse 3 sich noch relativ nah zu dem Wellenlager 2 befindet. Somit sind praktisch keine Ausschläge der Wellenschonbuchse 3 im Bereich des Drosselrings 5 zu erwarten und der Drosselring braucht nicht den Ausschlägen nachgeführt werden ("feste Drossel"). Ferner kann der Drosselspalt 50 zwischen Drosselring 5 und Wellenschonbuchse 3 eng gewählt werden.

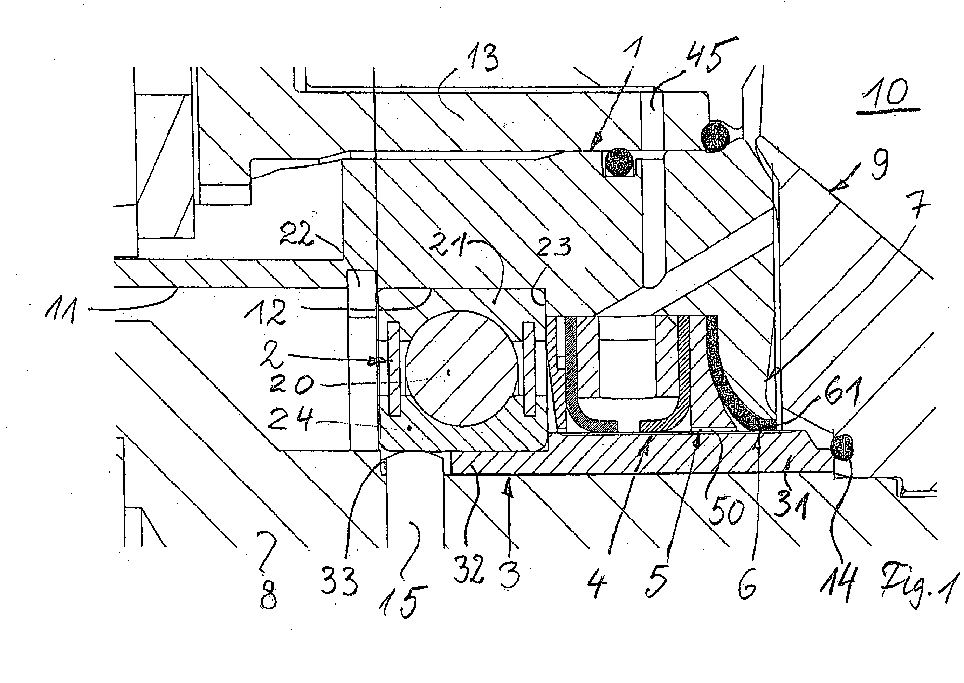

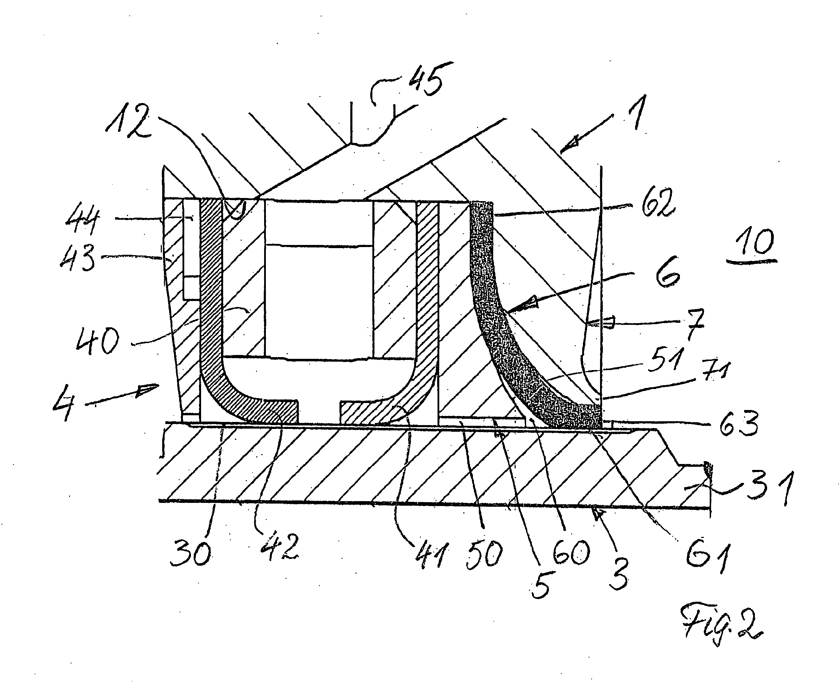

Die Lippendichtungsanordnung 4 (Fig. 2) stellt eine übliche Art der Abdichtung an der in Fig. 1 dargestellten Wellendurchführung dar. Es gibt einen mit Hohlräumen versehenen Trägerring 40 und zwei Dichtlippenringe 41, 42, deren Lippen auf der Oberfläche 30 der Wellenschonbuchse 3 laufen und im vorliegenden Ausführungsbeispiel gegeneinander gerichtet sind. Die äußeren Ränder dieser Dichtlippenringe 41, 42 sind eingespannt. Im Einzelnen ist der Dichtlippenring 41 zwischen dem Drosselring 5 und dem Trägerring 40 eingespannt, während beim Dichtlippenring 42 ein Abschlussring 43 mit Elastomereinlage 44 zusammen mit dem Trägerring 40 der Einspannung dient. Der Abschlussring 43 liegt an dem äußeren Laufring 21 des Lagers 2 an. Der Trägerring 40 weist Hohlräume auf, in die eine Zuleitung 45 für Schutzgas hinein führt. Durch den Druck des Schutzgases können die Lippen der Dichtlippenringe 41, 42 genügend stark gegen die Oberfläche 30 der Wellenschonbuchse 3 gepresst werden, um den Produktraum 10 an dem Wellenstumpf 8 abzudichten.

Die Nische 12 im Wellendurchführungsgehäuse 1 wird zur Seite des Produktraums 10 durch den Abstreiferring 7 begrenzt. Dieser weist einen Horn-förmigen Querschnitt mit zum Raum 10 hin gebogenen Flanken auf, so dass eine Abstreiferkante 71 gebildet wird. Auch der Drosselring 5 weist eine gebogene Flanke 51 auf, die zum Produktraum 10 hin gerichtet ist. Die Abmessungen der beschriebenen Teile sind so getroffen, dass noch eine trompetenförmige Lücke 60 verbleibt, in der der äußere Rand 62 der Ringdichtung 6 eingeklemmt werden kann, während der innere Rand 61, ein gebogenes Lippenende, einen gewissen Spielraum im Raum 60 hat. An der Abstreiferkante 71 ist die Oberfläche S-förmig gekrümmt, und der ringförmige Abstreiferrand 71 drückt den lippenförmigen Rand 61 gegen die Oberfläche 30 der Wellenschonbuchse 3. (Die Wirkungsweise der Ringdichtung 6 ist also unterschiedlich zu den Lippendichtungen 41, 42, deren Lippenenden frei sind.)

Als Material für die Dichtungen 41, 42, 61 wird ein für das zu verarbeitende Produkt verträgliches Material verwendet. Häufig ist dies eine PTFE-Graphit-Zusammensetzung. Als Material des Drosselrings 5 kommt vor allem ein Hochleistungskunststoff in Betracht, wofür PTFE-, Polyimid-, PEEK- oder Graphitfaser-Kunststoff-Compounds in Frage kommen. Bei außerordentlich hohen Drücken wird auch Metall für den Drosselring 5 eingesetzt. Entsprechend den verwendeten Materialien der Dichtungen und des Drosselkörpers wird die Oberfläche 30 der Wellenschonbuchse 3 vergütet, um den Verschleiß der im Abdichtsinne miteinander kooperierenden Oberflächen möglichst gering zu halten.

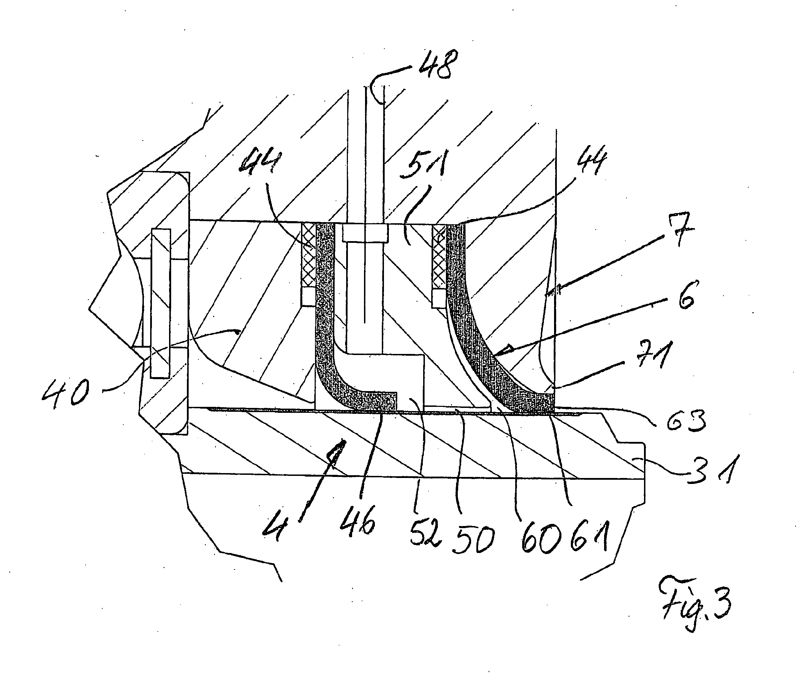

Fig. 3 zeigt eine Lippendichtungsanordnung 4, die anstelle oder zusätzlich zur Lippendichtungsanordnung der Fig. 2 angewendet werden kann. Ein Dichtlippenring 46 ist zwischen einem abgewandelten Trägerring 40 und einem abgewandelten Drosselring 51 eingespannt. Ferner ist eine Zuleitung 48 für Sterilisierungsdampf vorgesehen, die in einen Spülraum 52 und durch den Drosselspalt 50 in den trompetenförmigen Raum 60 hinführt, um alle Spalträume zu desinfizieren.

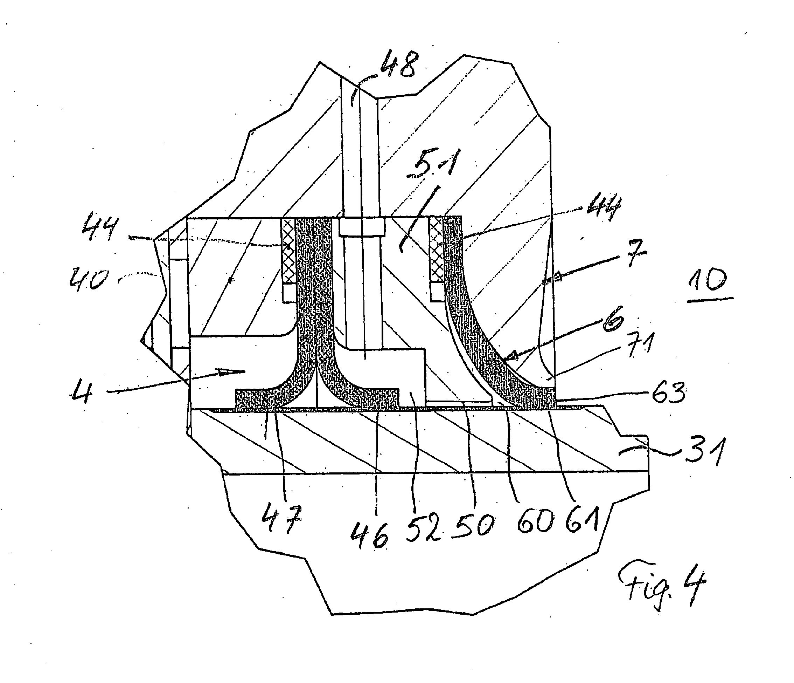

Fig. 4 zeigt eine abgewandelte Lippendichtungsanordnung 4 zu der nach Fig. 3. Es sind zwei Dichtlippenringe 46, 47 mit dem Rücken gegeneinander gestellt, wobei der Dichtlippenring 47 dem Dichtlippenring 41 in Fig. 2 entsprechen kann, um einen kompakten Zusammenbau der Lippendichtungsanordnung 4 nach Fig. 2 mit der nach Fig. 3 zu demonstrieren.

Die Arbeitsweise der Abdichteinrichtung ist wie folgt: In dem Produktraum 10 befindet sich ein chemisches oder pharmazeutisches Produkt, das bearbeitet oder gefördert wird. Häufig erfolgt dies unter hohem Druck. Hoher Druck hat die Tendenz, Produkt oder Komponenten des Produkts in Lücken und Spalten der Anlage gelangen zu lassen, was unerwünscht ist. Deshalb wird mittels der Lippendichtungsanordnung 4 und dem zugeführten Schutzgas ein Gegendruck erzeugt, so dass eine Sperre und ein Verschluss gegen Druckverlust und austretendes Produkt gebildet wird.

In dem Produktraum 10 kommen jedoch auch Druckschwankungen vor, was eine gewisse Pumpwirkung in Spalten und Lücken auf das Produkt ausübt. Diese Pumpwirkung soll sich aber möglichst wenig bis zur Abdichteinrichtung 4 auswirken. Deshalb wird mit dem Abstreiferring 7 und der Ringdichtung 6 ein Abstreifer geschaffen, der infolge der Biegsamkeit der Ringdichtung 6 sich wechselnden Drücken im Produktraum anpasst, d.h. den Druck im trompetenförmigen Raum 60 im Rhythmus der Druckschwankungen im Produktraum wechseln lässt. Das Lippenende 61 mit seiner Stirnfläche 63 wirkt nämlich wie ein Hubkolben, der bei steigendem Druck stärker in den trompetenförmigen Raum 60 hineingedrückt wird und bei fallendem Druck wieder seine Ausgangslage einnimmt. Wegen des Drosselspaltes 50 machen sich Druckschwankungen im Produktraum 10 im Bereich der Dichtlippenringe nur verzögert und abgeschwächt bemerkbar. Die Dichtlippenanordnung 4 kann deshalb weitgehend mit konstantem Druck beliefert werden, um Sperrwirkung zu entfalten. Der Druck des Schutzgases braucht also in der Regel nicht den kurzzeitigen Druckschwankungen im Produktraum nachgeführt zu werden.

Die Hubkolbenwirkung des Lippenendes 61 hat aber noch eine weitere vorteilhafte Wirkung:
Festmaterial wird praktisch komplett von der Oberfläche 30 der Wellenschonbuchse 3 abgeschabt und abgestreift und gelangt somit nicht in die Spalten und Lücken hinter den Abstreifer 6, 7.

### Bezugszeichen

- 1: Wellendurchführungsgehäuse
- 2: Wellenlager
- 3: Wellenschonbuchse
- 4: Lippendichtungsanordnung
- 5: Drosselring
- 6: Ringdichtung
- 7: Abstreiferring
- 8: Wellenstumpf
- 9: Arbeitsgerät
- 10: Produktraum
- 11: zylindrischer Raum
- 12: Nische
- 13: Buchse
- 14: O-Ring
- 15: Drehmomentenstift
- 20: Kugeln
- 21: äußerer Laufring
- 22: Sprengring
- 23: Schulter
- 24: Innenlaufring
- 30: Oberfläche der Wellenschonbuchse
- 31: Produktraum-nahes Ende
- 32: Produktraum-fernes Ende
- 40: Trägerring
- 41: Dichtlippenring
- 42: Dichtlippenring
- 43: Abschlussring
- 44: Elastomereinlage
- 45: Zuleitung für Schutzgas
- 46: Dichtlippenring
- 47: Dichtlippenring
- 48: Zuleitung
- 50: Drosselspalt
- 51: Drosselring
- 52: Spülraum
- 60: trompetenförmiger Raum
- 61: innerer lippenförmiger Rand, Dichtungsende
- 62: äußerer Rand
- 63: Stirnfläche
- 71: ringförmige Abstreiferkante

## Patentansprüche

1. Abdichteinrichtung an einem Produktraum (10) für chemische und pharmazeutische Produkte, umfassend
ein Wellendurchführungsgehäuse (1),
ein Wellenlager (2),
eine Wellenschonbuchse (3) und
eine Lippendichtungsanordnung (4),
**dadurch gekennzeichnet**,
dass am Wellendurchführungsgehäuse (1) angrenzend zum Produktraum (10) hin eine Abstreiferausbildung (6, 7) vorgesehen ist, die einen Abstreiferring (7) und eine Ringdichtung (6) mit einem Dichtungsende (61) aufweist, das durch den Abstreiferring (7) gegen die Wellenschonbuchse (3) gedrückt wird und so an der Wellenschonbuchse (3) zum Produktraum (10) abdichtet,
und dass ein Drosselring (5) zur Stützung der Ringdichtung (6) und zur Bildung eines Drosselspaltes (50) entlang der Wellenschonbuchse (3) vorgesehen ist und ein trompetenförmiger Raum (60) zwischen Drosselring (5) und Absteiferring (7) gebildet ist, in welchen die Ringdichtung (6) bei gewisser Beweglichkeit des Dichtungsendes (61) eingeklemmt ist, wobei das Dichtungsende (61) gegenüber Druckschwankungen im Produktraum (10) wie ein Druckausgleichskolben wirkt.

2. Abdichteinrichtung nach Anspruch 1,
**dadurch gekennzeichnet, dass** der Abstreiferring (7) als ein verengungsfortsatz des metallischen Wellendurchführungsgehäuses (1) ausgebildet ist.

3. Abdichteinrichtung nach Anspruch 1 oder 2,
**dadurch gekennzeichnet, dass** der Abstreiferring (7) eine Abstreifkante (71) zum Produktraum (10) hin aufweist, mit der das Dichtungsende (61) gegen die Oberfläche (30) der Wellenschonbuchse (3) geklemmt wird.

4. Abdichteinrichtung nach einem der Ansprüche 1 bis 3,
**dadurch gekennzeichnet, dass** das Wellendurchführungsgehäuse (1) eine Nische (12) aufweist, in der, vom Produktraum (10) ausgesehen, die Ringdichtung (6), der Drosselring (5), die Lippendichtanordnung (4) und das Wellenlager (2) angeordnet sind und die Nische (12) infolge der Wellenschonbuchse (3) abgeschlossen ist.

5. Abdichteinrichtung nach einem der Ansprüche 1 bis 4,
**dadurch gekennzeichnet, dass** das Wellendurchführungsgehäuse (1) mit Abstreiferring (7), Ringdichtung (6), Drosselring (5), Lippendichtungsanordnung (4), Wellenlager (2) und Wellenschonbuchse (3) eine Bau- und Funktionseinheit zum Einbau in Rühr-, Misch- und Pumpanlagen bildet.

6. Abdichteinrichtung nach einem der Ansprüche 1 bis 5,
**dadurch gekennzeichnet, dass** die Lippendichtungsanordnung (4) eine Zuleitung (45) für Schutzgas aufweist, um einen Gegendruck zum Druck im Produktraum (10) aufzubauen.

7. Abdichteinrichtung nach einem der Ansprüche 1 bis 6,
**dadurch gekennzeichnet, dass** die
Lippendichtungsanordnung (4) eine Zuleitung (48) für Sterilisierungsmedium aufweist, um Lücken und Kriechstromwege in der Abdichteinrichtung zu sterilisieren.

8. Abdichteinrichtung nach Anspruch 7,
**dadurch gekennzeichnet, dass** die Zuleitung (48) für Sterilisierungsmedium durch den Drosselring (51) in einen Spülraum (52) führt, der infolge eines Dichtlippenrings (46) der Lippendichtungsanordnung (4) nach außen und durch die Abstreiferausbildung (6, 7) zum Produktraum (10) hin abgedichtet ist.

9. Abdichteinrichtung nach einem der Ansprüche 1 bis 8,
**dadurch gekennzeichnet, dass** ein Wellenstumpf (8) durch die Wellenschonbuchse (3) hindurch reicht und dass eine Nabe eines im Produktraum (10) angeordneten Arbeitsgeräts (9) an dem Wellenstumpf (8) mit Anpressdruck unter Zwischenfügung eines O-Rings (14) gegen eine Stirnfläche der Wellenschonbuchse (3) gepresst wird.

10. Abdichteinrichtung nach Anspruch 9,
**dadurch gekennzeichnet, dass** das Arbeitsgerät (9) einen Flügel darstellt, dessen Umriss unter Freilassung von engen Spalten an die angrenzende Randfläche des Wellendurchführungsgehäuses (1) angepasst ist.

11. Abdichteinrichtung nach Anspruch 9,
**dadurch gekennzeichnet, dass** das Arbeitsgerät (9) einen Mischflügel, einen Propeller oder ein Pumpenrad darstellt.

12. Abdichteinrichtung nach einem der Ansprüche 1 bis 11,
**dadurch gekennzeichnet, dass** die Wellenschonbuchse (3) an ihrem dem Produktraum abgewandten Ende (32) Eingriffsaussparungen (33) zum Eingriff einer Drehmomentmitnahme (15) aufweist.

13. Abdichteinrichtung nach einem der Ansprüche 1 bis 12,
**dadurch gekennzeichnet, dass** die Ringdichtung (6) aus einer PTFE-Graphit-Zusammensetzung aufgebaut ist.

14. Abdichteinrichtung nach einem der Ansprüche 1 bis 13,
**dadurch gekennzeichnet, dass** der Drosselring (5) aus einem Hochleistungskunststoff besteht.

15. Abdichteinrichtung nach einem der Ansprüche 1 bis 14,
**dadurch gekennzeichnet, dass** die Oberfläche (30) der Wellenschonbuchse (3) mit,Material passend zu dem Material des Drosselrings (5) und/oder der Ringdichtung (6) vergütet ist.

## Claims

1. Sealing device on a product chamber (10) for chemical and pharmaceutical products, comprising
a shaft lead-through housing (1),
a shaft bearing (2),
a shaft protection bush (3) and
a lip seal arrangement (4),
**characterised in that** a wiper formation (6, 7) is provided on the shaft lead-through housing (1) adjacent to the product chamber (10) and has a wiper ring (7) and a ring seal (6) having a sealing end (61) which is pressed by the wiper ring (7) against the shaft protection bush (3) and in this way seals against the shaft protection bush (3) with respect to the product chamber (10),
and **in that** a throttle ring (5) is provided for supporting the ring seal (6) and for forming a throttle gap (50) along the shaft protection bush (3) and a trumpet-shaped chamber (60) is formed between the throttle ring (5) and the wiper ring (7), into which the ring seal (6) is clamped when the sealing end (61) is able to move in a certain way, wherein the sealing end (61) acts against pressure fluctuations in the product chamber (10) in the manner of a pressure equalisation piston.

2. Sealing device as claimed in claim 1,
**characterised in that** the wiper ring (7) is designed as a narrowing extension of the metallic shaft lead-through housing (1).

3. Sealing device as claimed in claim 1 or 2,
**characterised in that** the wiper ring (7) comprises a wiping edge (71) towards the product chamber (10), with which wiping edge the sealing end (61) is clamped against the surface (30) of the shaft protection bush (3).

4. Sealing device as claimed in any one of claims 1 to 3,
**characterised in that** the shaft lead-through housing (1) comprises a recess (12), in which, as seen from the product chamber (10), the ring seal (6), the throttle ring (5), the lip seal arrangement (4) and the shaft bearing (2) are arranged and the recess (12) is closed by reason of the shaft protection bush (3).

5. Sealing device as claimed in any one of claims 1 to 4,
**characterised in that** the shaft lead-through housing (1) forms, together with the wiper ring (7), ring seal (6), throttle ring (5), lip seal arrangement (4), shaft bearing (2) and shaft protection bush (3), a structural and functional unit for installation in agitation, mixing and pumping installations.

6. Sealing device as claimed in any one of claims 1 to 5,
**characterised in that** the lip seal arrangement (4) comprises a supply line (45) for protective gas, in order to build up a counter-pressure with respect to the pressure in the product chamber (10).

7. Sealing device as claimed in any one of claims 1 to 6,
**characterised in that** the lip seal arrangement (4) comprises a supply line (48) for sterilisation medium, in order to sterilise gaps and surface leakage paths in the sealing device.

8. Sealing device as claimed in claim 7,
**characterised in that** the supply line (48) for sterilisation medium passes through the throttle ring (51) into a rinsing chamber (52) which by reason of a sealing lip ring (46) of the lip seal arrangement (4) is sealed externally and by the wiper formation (6, 7) towards the product chamber (10).

9. Sealing device as claimed in any one of claims 1 to 8,
**characterised in that** a shaft stub (8) extends through the shaft protection bush (3) and **in that** a hub of a tool (9), which is arranged in the product chamber (10), on the shaft stub (8) is pressed with contact pressure, with the interposition of an O-ring (14), against an end surface of the shaft protection bush (3).

10. Sealing device as claimed in claim 9,
**characterised in that** the tool (9) is a blade, the contour of which is adapted to the adjacent edge surface of the shaft lead-through housing (1), with narrow gaps being left open.

11. Sealing device as claimed in claim 9,
**characterised in that** the tool (9) is a mixing blade, a propeller or a pump wheel

12. Sealing device as claimed in any one of claims 1 to 11,
**characterised in that** the shaft protection bush (3) comprises, on its end (32) facing away from the product chamber, engagement apertures (33) for engagement of a torque entrainment means (15).

13. Sealing device as claimed in any one of claims 1 to 12,
**characterised in that** the ring seal (6) is constructed of a PTFE-graphite composition.

14. Sealing device as claimed in any one of claims 1 to 13,
**characterised in that** the throttle ring (5) consists of a high-performance synthetic material.

15. Sealing device as claimed in any one of claims 1 to 14,
**characterised in that** the surface (30) of the shaft protection bush (3) is tempered with material corresponding to the material of the throttle ring (5) and/or the ring seal (6).

## Revendications

1. Dispositif d'étanchéité sur un compartiment à produit (10) pour des produits chimiques et pharmaceutiques, comprenant :
un carter de traversée d'arbre (1),
un palier d'arbre (2),
un manchon de protection d'arbre (3) et
un dispositif de joint à lèvre (4),
**caractérisé en ce que** :
une formation racleuse (6, 7) est prévue sur le carter de traversée d'arbre (1) adjacente au compartiment à produit (10), laquelle présente une bague racleuse (7) et un joint annulaire (6) avec une extrémité de joint (61) serrée par la bague racleuse (7) contre le manchon de protection d'arbre (3) et assurant ainsi une étanchéité en étant appliquée contre le manchon de protection d'arbre (3) vers le compartiment à produit (10), et en ce qu'une bague d'étranglement (5) est prévue pour l'appui du joint annulaire (6) et pour la formation d'une fente d'étranglement (50) le long du manchon de protection d'arbre (3), et un interstice en forme de trompette (60) est formé entre la bague d'étranglement (5) et la bague racleuse (7), le joint annulaire (6) étant pincé avec une certaine mobilité de l'extrémité de joint (61), l'extrémité du joint (61) agissant contre des variations de pression dans le compartiment à produit (10) à l'instar d'un piston compensateur de pression.

2. Dispositif d'étanchéité selon la revendication 1, **caractérisé en ce que** la bague racleuse (7) est réalisée comme un appendice aminci du carter métallique de traversée d'arbre (1).

3. Dispositif d'étanchéité selon la revendication 1 ou la revendication 2, **caractérisé en ce que** la bague racleuse (7) présente un bord de raclage (71) vers le compartiment à produit (10), au moyen duquel l'extrémité du joint (61) est serrée contre la surface (30) du manchon de protection d'arbre (3).

4. Dispositif d'étanchéité selon l'une des revendications 1 à 3, **caractérisé en ce que** le carter de traversée d'arbre (1) présente une niche (12) dans laquelle, vus du compartiment à produit (10), le joint annulaire (6), la bague d'étranglement (5), le dispositif de joint à lèvre (4) et le palier d'arbre (2) se succèdent, la niche (12) étant fermée par le manchon de protection d'arbre (3).

5. Dispositif d'étanchéité selon l'une des revendications 1 à 4, **caractérisé en ce que** le carter de traversée d'arbre (1) forme avec la bague racleuse (7), le joint annulaire (6), la bague d'étranglement (5), le dispositif de joint à lèvre (4), le palier d'arbre (2) et le manchon de protection d'arbre (3), une unité de construction et fonctionnelle à monter dans des installations d'agitation, de mélange et de pompage.

6. Dispositif d'étanchéité selon l'une des revendications 1 à 5, **caractérisé en ce que** le dispositif de joint à lèvre (4) comporte une conduite d'amenée (45) pour un gaz protecteur afin de générer une contre-pression la pression dans le compartiment à produit (10).

7. Dispositif d'étanchéité selon l'une des revendications 1 à 6, **caractérisé en ce que** le dispositif de joint à lèvre (4) comporte une conduite d'amenée (48) pour un fluide de stérilisation afin de stériliser des lacunes et des voies de courants de fuite dans le dispositif d'étanchéité.

8. Dispositif d'étanchéité selon la revendication 7, **caractérisé en ce que** la conduite d'amenée (48) pour fluide de stérilisation mène dans un compartiment de rinçage (52) par la bague d'étranglement (51), lequel est rendu étanche vers l'extérieur par une bague à lèvre (46) du dispositif de joint à lèvre (4) et par la formation racleuse (6, 7) vers le compartiment à produit (10).

9. Dispositif d'étanchéité selon l'une des revendications 1 à 8, **caractérisé en ce qu'**un bout d'arbre (8) passe dans le manchon de protection d'arbre (3) et **en ce qu'**un moyeu d'un outil (9) disposé dans le compartiment de produit (10) sur le bout d'arbre (8) est serré contre une face frontale du manchon de protection d'arbre (3) par une pression de serrage avec intercalation d'un joint torique (14).

10. Dispositif d'étanchéité selon la revendication 9, **caractérisé en ce que** l'outil (9) forme une pale, dont le contour est ajusté à la surface périphérique du carter de bout d'arbre (1), des fentes étroites étant ménagées contre la surface périphérique adjacente du carter de traversée d'arbre (1).

11. Dispositif d'étanchéité selon la revendication 9, **caractérisé en ce que** l'outil (9) forme une pale mélangeuse, une hélice ou une roue de pompe.

12. Dispositif d'étanchéité selon l'une des revendications 1 à 11, **caractérisé en ce que** le manchon de protection d'arbre (3) présente à son extrémité (32) distante du compartiment de produit des évidements de saisie (33) pour la saisie d'un entraîneur de couple (15).

13. Dispositif d'étanchéité selon l'une des revendications 1 à 12, **caractérisé en ce que** le joint annulaire (6) est constitué d'une composition PTFE-graphite.

14. Dispositif d'étanchéité selon l'une des revendications 1 à 13, **caractérisé en ce que** la bague d'étranglement (5) est constituée d'une matière plastique hautes performances.

15. Dispositif d'étanchéité selon l'une des revendications 1 à 14, **caractérisé en ce que** la surface (30) du manchon de protection d'arbre (3) est traitée avec un matériau adapté au matériau de la bague d'étranglement (5) et/ou du joint annulaire (6).
